# EUROPEAN PATENT APPLICATION

(11) **EP 4 632 904 A1**
(43) Date of publication of application: **15.10.2025**
(21) Application number: 24169462.9
(22) Date of filing: 10.04.2024
(51) Int. Cl.: H01M 50/224, H01M 50/242, H01M 50/244, H01M 50/249, H01M 50/262

(54) **BATTERY SYSTEM WITH IMPROVED END PLATE**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery system (100) including a plurality of battery cells (12) arranged along a stacking axis (A) to form a cell stack (10), and a cell stack frame (20) accommodating the cell stack (10), wherein the cell stack frame (20) includes frame walls (24, 25) and an end plate (22), wherein the end plate (22) includes, at opposite lateral sides thereof, first interlocking elements (230) which are adapted to interlock with second interlocking elements (232) of the frame walls (24, 25) in a fixture position of the end plate (22) for establishing a snap fit between the end plate (22) and the frame walls (24, 25) such that the end plate (22) exerts a pressure onto the cell stack (10), and wherein the end plate (22) comprises a plate element (221) facing the cell stack (10) and, in the fixture position, exerting the pressure onto the cell stack (10), and lateral wall elements (222, 224) extending from the plate element (221) in a direction away from the cell stack (10).

## Description

### Field of the Disclosure

The present disclosure relates to a battery system with an improved end plate. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The battery cells of a battery pack may be arranged to form a cell stack by stacking the battery cells onto each other or arranging the battery cells in a row. Neighboring battery cells of a cell stack may be distanced from one another via cell spacers. The cell stack may be placed inside a cell stack frame delimiting the battery cells to the outside. To ensure optimal operation of the battery cells over their lifetime, it is important that a predefined pressure is exerted onto the battery cells by the cell stack frame to compensate for possible production tolerances and swelling of the battery cells.

Current assembly methods for battery cells provide that the cell stack is pre-compressed via an insertion clamp and inserted into a cavity of the cell stack frame where the cell stack is then held in the compressed state via the end plates. To enable a damage free and force free placement of the cell stack into the cavity, the cell stack has to be over-compressed, putting the battery cells under great pressure. Most of this pre-tension of the cell stack is lost when the insertion clamp is released and the cells are allowed to expand to completely fill the cavity. The pre-compression outside of the cell stack frame and the insertion of the stressed cell stack into the cavity may be cumbersome and complicated. Further, the level of achievable compression of the cell stack in its final assembly, i.e. after expanding, is relatively low.

As an alternative assembly method, the cell stack may be inserted into the cell stack frame without pre-compression and may then be compressed by pressing one of the end plates against the cell stack and fixing the end plate in its position while the stack is held under pressure. This fixing of the end plate is usually performed by welding, bolting or screwing the end plate to side walls of the cell stack frame which may be time consuming and prone to error because it may be difficult to place the end plate correctly to ensure that the right amount of pressure is exerted onto the cell stack.

It may thus be an object of the present application to provide a battery system with an improved cell stack frame simplifying assembly and ensuring that a desired compression of the cell stack is achieved.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided including a plurality of battery cells arranged along a stacking axis to form a cell stack, and a cell stack frame accommodating the cell stack, wherein the cell stack frame includes frame walls and an end plate, wherein the end plate includes, at opposite lateral sides of the end plate, first interlocking elements adapted to interlock with second interlocking elements of the frame walls in a fixture position of the end plate for establishing a snap fit between the end plate and the frame walls such that the end plate exerts a pressure onto the cell stack, and wherein the end plate includes a plate element facing the cell stack and, in the fixture position, exerting the pressure onto the cell stack, and lateral wall elements extending from the plate element in a direction away from the cell stack.

According to another aspect of the present disclosure, the first interlocking elements are cantilever snap-fit elements and the second interlocking elements are receptacles for the cantilever snap-fit elements, or wherein the second interlocking elements are cantilever snap-fit elements and the first interlocking elements are receptacles for the cantilever snap-fit elements.

According to another aspect of the present disclosure, the first interlocking elements are arranged at opposite ones of the lateral wall elements.

According to another aspect of the present disclosure, the lateral wall elements abut the inner sides of the frame walls of the cell stack frame.

According to another aspect of the present disclosure, the end plate includes first interlocking elements at all four lateral sides, and wherein the frame walls of the cell stack frame include two side walls, a top cover and a bottom cover, each of the side walls, top cover and bottom cover having second interlocking elements, wherein, in the fixture position of the end plate, a snap fit is established between the end plate and the two side walls, top cover and bottom cover.

According to another aspect of the present disclosure, the end plate, including the first interlocking elements, is formed as one-piece, e.g. from a sheet metal.

According to another aspect of the present disclosure, the end plate is made of metal.

According to another aspect of the present disclosure, the end plate is made of pressed steel.

Yet another aspect of the present disclosure refers to an electric vehicle including a battery system according to the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment, the battery system including an end plate establishing a snap-fit with frame walls of a cell stack frame.
- Fig. 2: illustrates a perspective view of the end plate of the battery system of Fig. 1.
- Fig. 3a: illustrates a front view of the end plate of Fig. 2.
- Fig. 3b: illustrates a side view of the end plate of Fig. 2.
- Fig. 3c: illustrates a top view of the end plate of Fig. 2.
- Fig. 4a: illustrates a cross-sectional view of the battery system of Fig. 1 before compressing.
- Fig. 4b: illustrates a cross-sectional view of the battery system of Fig. 1 while during compressing.
- Fig. 4c: illustrates a cross-sectional view of the battery system of Fig. 1 after compressing.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row along a stacking axis. Cell spacers may be disposed in-between adjacent or neighboring battery cells. Thus, neighboring battery cells of the cell stack may be distanced from one another via a cell spacer. The cell stack may form one or more battery packs.

The cell stack is disposed inside a cell stack frame. The cell stack frame includes at least two opposite frame walls, i.e. two frame walls which are disposed opposite each other. The frame walls delimit an interior space or cavity of the cell stack frame, the interior space or cavity housing/accommodating the cell stack. The cell stack frame may include four frame walls, e.g. two opposite side walls, a top cover and a bottom cover disposed opposite the bottom cover.

The cell stack frame may thus have a quadrilateral shape or cross-section, e.g. a rectangular shape or cross-section. Further, the cell stack frame includes at least one end plate. The cell stack frame may include two end plates. The cell stack arranged inside the cell stack frame may thus be delimited from at least four sides by the end plates and frame walls, or by all six sides if four frame walls are provided. The cell stack frame may delimit the cell stack to an outside, i.e. to an environment of the cell stack. The at least one end plate may form an outer delimitation of the cell stack frame. Also, the other end plate and/or the frame walls may form the outer delimitation of the cell stack frame. In other words, the cell stack frame, e.g. the two end plates and the frame walls, may delimit an interior space or cavity of the cell stack frame from the exterior, wherein in said interior space or cavity the cell stack is arranged. One or both of the end plates may exert a pressure onto the cell stack.

The at least one end plate includes first interlocking elements that are disposed at opposite lateral sides of the end plate. The first interlocking elements are disposed at these lateral sides of the end plate which face the frame walls. The frame walls include corresponding second interlocking elements. For example, the frame walls may be two opposite side walls of the cell stack frame, wherein the first interlocking elements may be arranged at a first lateral side of the end plate facing a first one of the side walls and at a second lateral side opposite the first lateral side, the second lateral side facing the second one of the side walls. The first interlocking elements and the second interlocking elements are snap-fit elements adapted to establish a snap-fit. In other words, the interlocking elements form protruding edges and corresponding snap-in areas. Thus, the first and second interlocking elements are adapted to interlock with each other in a fixture position of the end plate such that a snap fit is established between the end plate and the frame walls. In this fixture position, the end plate is placed such that the end plate exerts a pressure onto the cell stack. In other words, the end plate is pressed against the cell stack. If the cell stack frame includes two end plates, both end plates may include such first interlocking elements and may thus be fixed to the frame walls via such a snap-fit. The first and second interlocking elements are integral elements/parts of the end plate and frame walls, respectively. The interlocking elements may be adapted to establish a permanent or multiple-use snap fit.

When assembling the battery system according to the disclosure, the cell stack may be placed inside the interior space or cavity delimited by the frame walls of the cell stack frame without any pre-compression. After inserting the cell stack, the at least one end plate may be inserted into the interior space or cavity and pressed against the cell stack thereby compressing the cell stack, i.e. reducing a cell stack length, until the end plate reaches the predefined fixture position and the first and second interlocking elements interlock thereby establishing the snap-fit. The fixture position, i.e. the position of the second interlocking elements, may be chosen such that a desired compression of the cell stack is achieved. The end plate thus automatically locks into place the moment the desired compression of the cell stack is accomplished. This simplifies assembly and ensures that a desired compression of the cell stack is achieved. The end plate does not need to be held in place because it is not fixed to the frame walls via riveting or welding but automatically via its integral locking elements.

According to an embodiment, the first interlocking elements are cantilever snap-fit elements and the second interlocking elements are receptacles for the cantilever snap-fit elements, or wherein the second interlocking elements are cantilever snap-fit elements and the first interlocking elements are receptacles for the cantilever snap-fit elements. The first interlocking elements may thus, as cantilever snap-fit elements, be integrally formed with the end plate as structural elements, e.g. (canti)levers, supported at one end and extending from the lateral sides of the end plate at an angle towards the outside. The second interlocking elements may thus be formed as receptacles adapted to receive the cantilever snap-fit elements. Of course, the second interlocking elements may alternatively be formed a such cantilever snap-fit elements and the first interlocking elements of the end plate may be formed as receptacles adapted to receive the cantilever snap-fit elements. The snap-fit may be undoable, i.e. the cantilever snap-fit elements may be removed from their respective receptacle. For example, if the cantilever snap-fit elements include a (canti)lever, the (canti)lever may be pushed inwards such that the snap-fit is released or undone. A cantilever snap-fit may be simple to manufacture, may be resistant and may ensure simplified assembly of the battery system and that a desired compression of the cell stack is achieved.

The end plate includes a plate element facing the cell stack and, in the fixture position, exerting the pressure onto the cell stack, and lateral wall elements extending from the plate element in a direction away from the cell stack (on the stacking axis). In an embodiment, the first interlocking elements are arranged at opposite ones of the lateral wall elements. The plate element may be the part of the end plate that abuts the cell stack and presses against the cell stack. The end plate may be rectangular having four lateral wall elements forming four lateral sides of the plate element. Two opposite ones of these four lateral wall elements which face the side walls of the cell stack frame may include the first interlocking elements. The lateral wall elements may facilitate the placing of the end plate into the fixture position, may e.g. help guide the end plate into the fixture position. The lateral wall elements may thus further simplify the assembly of the battery system and may ensure that a desired compression of the cell stack is achieved.

According to an embodiment, the lateral wall elements abut the inner sides of the frame walls of the cell stack frame. In other words, the lateral wall elements contact the inner sides of the frame walls. The lateral wall elements may face and extend parallel to the frame walls. For example, the lateral wall elements may abut inner sides of the side walls, an inner side of a top cover and/or an inner side of a bottom cover of the cell stack frame. When the end plate is rectangular having four lateral wall elements forming four lateral sides of the plate element, each of the four lateral wall elements may abut the inner side of the frame wall it is facing. The end plate may thus securely close an end of the cell stack frame, i.e. of the interior space or cavity. The lateral wall elements abutting the inner sides of the frame walls of the cell stack frame may facilitate the placing of the end plate into the fixture position, may e.g. help guide the end plate into the fixture position. The lateral wall elements may thus further simplify the assembly of the battery system and may ensure that a desired compression of the cell stack is achieved.

According to an embodiment, the end plate includes first interlocking elements at all four lateral sides, and the frame walls of the cell stack frame include two side walls, a top cover and a bottom cover, each of the side walls, top cover and bottom cover having second interlocking elements, wherein, in the fixture position of the end plate, a snap fit is established between the end plate and the two side walls, top cover and bottom cover. In this embodiment, the end plate may include the first interlocking elements not only at two opposite lateral sides but at all four lateral sides. Correspondingly, the four frame walls of the cell stack frame may be provided, each frame wall having the second interlocking elements. For example, as mentioned, the end plate may be rectangular having four lateral wall elements forming four lateral sides of the plate element, and the cell stack frame may include four frame walls each facing one of the lateral wall elements, wherein each of the lateral wall elements includes first interlocking elements adapted to interlock with second interlocking elements of the opposite frame walls. Thus, in the fixture position, a snap-fit may be achieved between all four lateral sides/lateral wall elements and the respective frame wall (= two side walls, top cover, bottom cover) the lateral sides/lateral wall elements are facing. This may result in a particularly secure snap-fit and may ensure that the end plate automatically locks into place the moment the end plate reaches the fixture position and thus the moment the desired compression of the cell stack is accomplished. This simplifies assembly and ensures that a desired compression of the cell stack is achieved.

According to an embodiment, the end plate including the first interlocking elements is formed as one-piece. The complete end plate may be formed as one-piece. For example, the end plate including the plate element, the lateral wall elements and the first interlocking elements may be formed as one-piece. The end plate may be formed as one-piece from a sheet material. For example, the end plate may be formed from sheet metal such as steel, e.g. pressed steel. Thus, the first interlocking elements, the plate element, and the lateral wall elements may form integral parts of the end plate. The end plate may thus be formed by processing a single sheet metal, for example by deep-drawing, bending, folding and/or cutting the sheet metal. The end plate may be formed without any connecting means such as rivets, or screws and without welding. The displaceable end plate being formed as one-piece, e.g. from a sheet material, may provide for a simple manufacturing while providing stability and flexibility to the end plate and may ensure that the end plate establishes and maintains the snap-fit with the frame walls. This simplifies assembly and ensures that a desired compression of the cell stack is achieved.

According to an embodiment, the battery system includes two end plates according to the disclosure, one end plate arranged at each end of the cell stack frame. That is, each end plate may include, at opposite lateral sides thereof, first interlocking elements which are adapted to interlock with second interlocking elements of the frame walls in a fixture position of the end plate for establishing a snap fit between the end plate and the frame walls such that the end plate exerts a pressure onto the cell stack. Providing two such end plates may ensure the desired compression of the cell stack.

The disclosure also pertains to an electric vehicle including a battery system according to the disclosure, i.e. a battery system as explained above.

According to one aspect of the present disclosure, a method for assembling a battery system according to the disclosure, i.e. a battery system as explained above, may be provided. Therein, the cell stack frame may be provided without the end plate placed in its fixture position. The cell stack may then be inserted into the interior space of the cell stack frame without pre-compression. Subsequently, the end plate may be moved into its fixture position where the first and second interlocking elements interlock and establish the snap-fit, thereby compressing the cell stack to a desired/predefined amount.

### Specific Embodiments

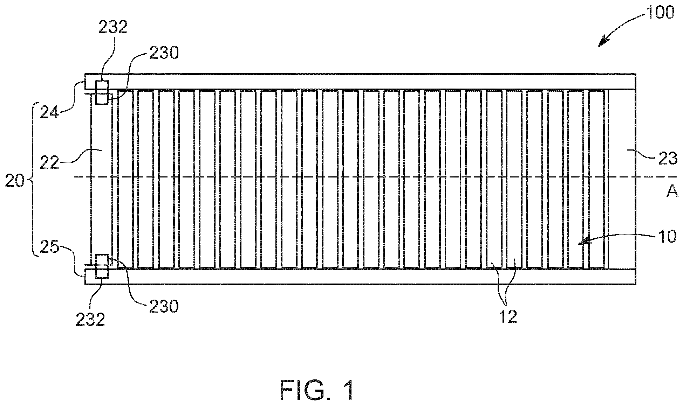

Fig. 1 illustrates a schematic top view of a battery system 100 according to an embodiment. The battery system 100 includes a plurality of battery cells 12 arranged to form a cell stack 10, and a cell stack frame 20 accommodating the cell stack 10. The battery cells 12 are stacked or arranged along a stacking axis A.

The cell stack frame 20 includes two end plates 22, 23 and two side walls 24, 25 connecting the end plates 22, 23. The end plates 22, 23 and side walls 24, 25 delimit the cell stack 10 from four sides as shown in Fig. 1. The cell stack frame 20 may further include a top cover and a bottom cover (not shown) to completely encase the cell stack 10. The two side walls 24, 25, the top cover and the bottom cover may form frame walls of the cell stack frame 20.

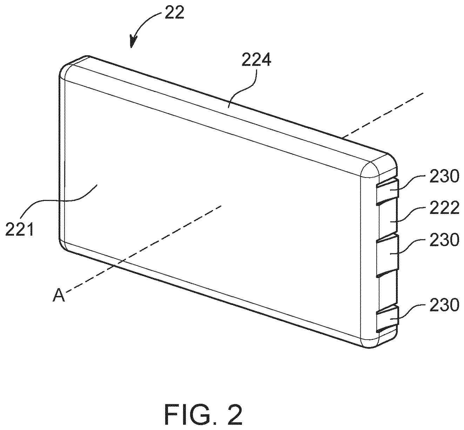

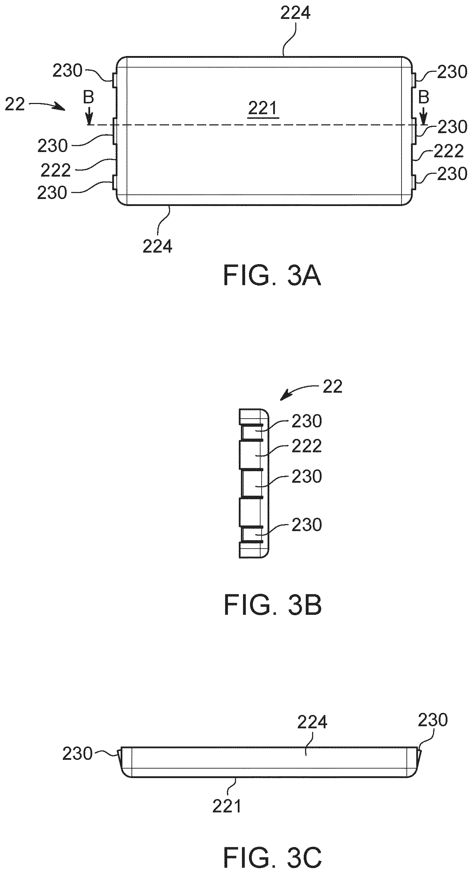

Fig. 2 illustrates a perspective view of the end plate 22 of the battery system 100 of Fig. 1. Fig. 3a, 3b and 3c each illustrate a front view, side view and top view of the end plate of Fig. 2. Referring to Fig. 2 and Fig. 3, the end plate 22 may have a rectangular shape and include a rectangular plate element 221 facing the cell stack 10 and four lateral wall elements 222, 224 extending from the plate element 221 backwards, i.e. in a direction away from the cell stack 10. The four lateral wall elements 222, 224 extend parallel to the frame walls, i.e. to the side walls 24, 25 and to the top cover and the bottom cover, if provided.

At opposite lateral sides of the end plate 22, namely at the lateral wall elements 222, first interlocking elements 230 are provided. Corresponding second interlocking elements 232 are provided at the side walls 24, 25 of the cell stack frame 20. The first interlocking elements 230 are cantilever snap-fit elements and the second interlocking elements 232 are receptacles for the cantilever snap-fit elements.

The end plate 22 is formed as one-piece from a single sheet of metal, e.g. from pressed steel. The end plate 22 may be formed from the sheet metal e.g. via deep-drawing the plate element 221 and the lateral wall elements 222, 224 and by cutting and bending the first interlocking elements 230.

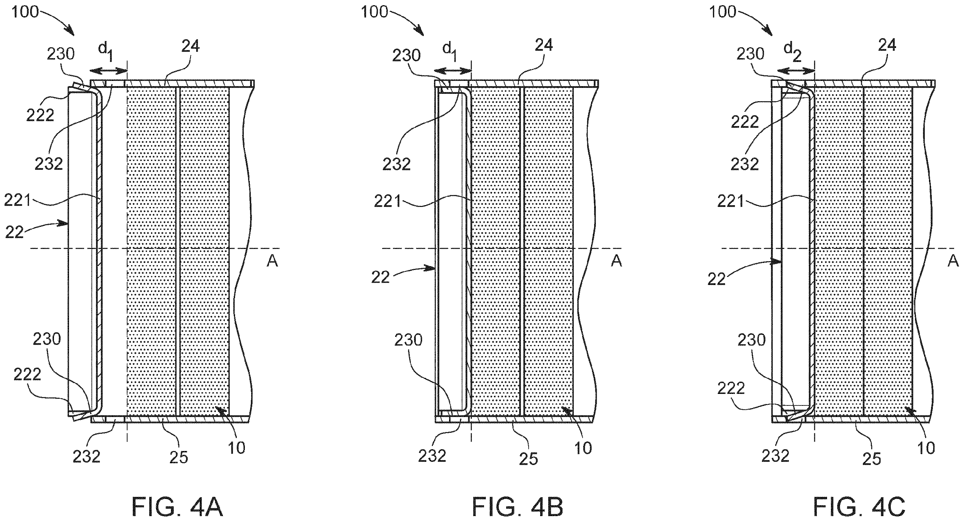

Fig. 4 illustrates three partial cross-sectional views of the battery system 100 of Fig. 1 showing the insertion process of the end plate 22 into an interior space of the cell stack frame 20. Referring to Fig. 4, when assembling the battery system 100, the cell stack 10 may be placed inside an interior space or cavity delimited by the side walls 24, 25 of the cell stack frame 20 without any pre-compression. After inserting the cell stack 10, the end plate 22 may be inserted into the interior space or cavity as shown in Fig. 4. Fig. 4 shows partly cross-sectional views of the battery system 100 of Fig. 1 along a line B-B shown in Fig. 3a.

In Fig. 4a, the end plate 22 is not yet inserted into the interior space or cavity of the cell stack frame 20. Thus, the first interlocking elements 230 are in their original, non-deformed state. As shown in Fig. 4a, and end side of the cell stack 10 is arranged at a first distance d₁ from an opening of the cell stack 10 through which the end plate 22 is introduced.

In Fig. 4b, the end plate 22 is moved into the interior space or cavity of the cell stack frame 20 such that the first interlocking elements 230 are deformed, i.e. the cantilever snap-fit elements are deformed/pressed backwards. Here, the plate element 221 of the end plate 22 already contacts the cell stack 10. Thus, the end plate 22 is moved so far towards the cell stack 10 that the side of the plate element 221 facing the end side of the cell stack 10 arranged at the first distance d₁ from the opening of the cell stack 10.

When moved further into the interior space or cavity of the cell stack frame 20, the end plate 22 reaches its fixture position shown in Fig. 4c (and schematically in Fig. 1). During this further movement, the end plate 22 is pressed against the cell stack 10 thereby compressing the cell stack 10. In the fixture position, the first interlocking elements 230 interlock with the second interlocking elements 232, i.e. the cantilever snap-fit elements snap back into their original shape and into the receptacles, thereby establishing a snap fit between the end plate 22 and the side walls 24, 25. Thus, in the fixture position, the end plate 22 exerts a desired/predefined pressure onto the cell stack 10. As shown in Fig. 4c, the end plate 22 is moved so far towards the cell stack 10 that the side of the plate element 221 facing the end side of the cell stack 10, and the end side of the cell stack 10 is arranged at a second distance d₂ from the opening of the cell stack 10, wherein the second distance d₂ is larger than the first distance d₁, d₂ > d₁. Here, the lateral wall elements 222 abut the inner sides of the side walls 24, 25.

The end plate 22 thus automatically locks into place the moment the desired compression of the cell stack 10 is accomplished. This simplifies assembly and ensures that a desired compression of the cell stack 10 is achieved. The end plate 22 does not need to be held in place because it is not fixed to the side walls 24, 25 via riveting or welding but automatically via its integral first interlocking elements 230.

While inserting the end plate 22, the lateral wall elements 222 abut the side walls 24, 25 (and possibly the lateral wall elements 224 any top cover and bottom cover) thereby facilitating the placing of the end plate. The top cover and bottom cover, if provided, may also include second interlocking elements and the end plate 22 may thus further include first interlocking elements at the lateral wall elements 224 so that further snap-fits are established between the end plate 22 and the top cover and bottom cover. This further simplifies assembly and ensures that a desired compression of the cell stack 10 is achieved.

### Reference signs

- 10: cell stack
- 12: battery cells
- 20: cell stack frame
- 22: end plate
- 23: end plate
- 24: side wall (frame wall)
- 25: side wall (frame wall)
- 100: battery system
- 221: plate element
- 222: lateral wall elements
- 224: lateral wall elements
- 230: first interlocking elements
- 232: second interlocking elements
- A: stacking axis

## Claims

1. A battery system (100) comprising a plurality of battery cells (12) arranged along a stacking axis (A) to form a cell stack (10), and a cell stack frame (20) accommodating the cell stack (10), wherein the cell stack frame (20) comprises frame walls (24, 25) and an end plate (22), wherein the end plate (22) comprises, at opposite lateral sides of the end plate (22), first interlocking elements (230) adapted to interlock with second interlocking elements (232) of the frame walls (24, 25) in a fixture position of the end plate (22) for establishing a snap fit between the end plate (22) and the frame walls (24, 25) such that the end plate (22) exerts a pressure onto the cell stack (10), and wherein the end plate (22) comprises a plate element (221) facing the cell stack (10) and, in the fixture position, exerting the pressure onto the cell stack (10), and lateral wall elements (222, 224) extending from the plate element (221) in a direction away from the cell stack (10).

2. The battery system (100) according to claim 1, wherein the first interlocking elements (230) are cantilever snap-fit elements and the second interlocking elements (232) are receptacles for the cantilever snap-fit elements, or wherein the second interlocking elements (232) are cantilever snap-fit elements and the first interlocking elements (230) are receptacles for the cantilever snap-fit elements.

3. The battery system (100) according to any one of the preceding claims, wherein the first interlocking elements (230) are arranged at opposite ones of the lateral wall elements (222, 224).

4. The battery system (100) according to claim 3, wherein the lateral wall elements (222, 224) abut the inner sides of the frame walls (24, 25) of the cell stack frame (10).

5. The battery system (100) according to any one of the preceding claims, wherein the end plate (22) comprises first interlocking elements (230) at all four lateral sides, and wherein the frame walls of the cell stack frame (20) comprise two side walls (24, 25), a top cover and a bottom cover, each of the side walls (24, 25), top cover and bottom cover having second interlocking elements (232), wherein, in the fixture position of the end plate (22), a snap fit is established between the end plate (22) and the two side walls (24, 25), top cover and bottom cover.

6. The battery system (100) according to any one of the preceding claims, wherein the end plate (22), including the first interlocking elements (230), is formed as one-piece.

7. The battery system (100) according to any one of the preceding claims, wherein the end plate (22) is made of metal.

8. The battery system (100) according to claim 7, wherein the end plate (22) is made of pressed steel.

9. The battery system (100) according to any one of the preceding claims, comprising two end plates (22), one at each end of the cell stack frame (20), wherein each end plate (22) comprises, at opposite lateral sides thereof, first interlocking elements (230) adapted to interlock with second interlocking elements (232) of the frame walls (24, 25) in a fixture position of the end plate (22) for establishing a snap fit between the end plate (22) and the frame walls (24, 25) such that the end plate (22) exerts a pressure onto the cell stack (10).

10. An electric vehicle comprising the battery system (100) according to any one of the preceding claims.
